(19) Europäisches Patentamt / European Patent Office / Office européen des brevets

(11) **EP 2 870 385 B1**

(12) **FASCICULE DE BREVET EUROPEEN**

(45) Date de publication et mention de la délivrance du brevet:
**17.08.2016 Bulletin 2016/33**

(21) Numéro de dépôt: **13744641.5**

(22) Date de dépôt: **27.06.2013**

(51) Int Cl.:
***F16H 61/4069*** *(2010.01)*   ***B60W 20/00*** *(2016.01)*
***B60K 6/12*** *(2006.01)*

(86) Numéro de dépôt international:
**PCT/FR2013/051497**

(87) Numéro de publication internationale:
**WO 2014/006302 (09.01.2014 Gazette 2014/02)**

(54) **PROCEDE DE REGULATION DE PRESSION HYDRAULIQUE PAR UNE DEMANDE DE DEBIT, AFIN DE RECHARGER UN ACCUMULATEUR**

VERFAHREN ZUR REGELUNG DES HYDRAULISCHEN DRUCKS ANHAND EINER DURCHFLUSSRATENNACHFRAGE ZUR AUFLADUNG EINES AKKUMULATORS

METHOD FOR REGULATING HYDRAULIC PRESSURE USING A FLOW RATE DEMAND SO AS TO RECHARGE AN ACCUMULATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.07.2012 FR 1256342**

(43) Date de publication de la demande:
**13.05.2015 Bulletin 2015/20**

(73) Titulaire: **Technoboost**
**75116 Paris (FR)**

(72) Inventeur: **GOURVES, Frederic**
**F-95800 Courdimanche (FR)**

(74) Mandataire: **Rosenberg, Muriel Sylvie**
**Peugeot Citroën Automobiles SA**
**Propriété Industrielle - LG 081**
**18 rue des Fauvelles**
**92250 La Garenne Colombes (FR)**

(56) Documents cités:
**DE-A1- 10 143 830   DE-A1-102009 060 225**
**FR-A1- 2 330 889   US-A1- 2012 123 661**

**Description**

La présente invention revendique la priorité de la demande française 1256342 déposée le 3 juillet 2012 dont le contenu (texte, dessins et revendications) est ici incorporé par référence.

L'invention concerne un procédé de régulation de pression hydraulique, en particulier pour un véhicule hybride, ainsi qu'un calculateur de contrôle et un véhicule hybride mettant en oeuvre un tel procédé.

Un tel procédé de régulation de pression hydraulique est connu du document DE-A-10143830.

Certains véhicules hybrides comportent un moteur thermique entraînant une pompe hydraulique à cylindrée variable, qui charge un accumulateur par une haute pression, afin d'alimenter une machine hydraulique à cylindrée variable pouvant fonctionner en moteur ou en pompe, entraînant des roues motrices de ce véhicule. La sortie de la machine hydraulique est reliée à une basse pression, qui retourne vers l'entrée de la pompe.

On dispose ainsi avec la machine hydraulique réversible, la possibilité d'entraîner le véhicule par cette machine travaillant en moteur et de récupérer en partie l'énergie cinétique de ce véhicule, lors des freinages notamment, par la machine travaillant en pompe et produisant une pression hydraulique qui est stockée dans l'accumulateur.

De plus, le véhicule peut rouler avec le moteur thermique à l'arrêt en mode sans émission de gaz polluant, en prélevant une énergie dans l'accumulateur hydraulique pour la délivrer à la machine hydraulique travaillant en moteur.

Le conducteur dispose d'une pédale d'accélérateur, pour demander une certaine puissance d'entraînement du véhicule par les roues motrices.

Pour maintenir une pression constante dans l'accumulateur, la puissance totale nécessaire que doit délivrer le moteur thermique est égale alors à la puissance demandée par le conducteur, à laquelle il faut ajouter les puissances générées par les pertes mécaniques ainsi que par les pertes hydrauliques.

Pour cela, un calculateur de contrôle de la chaîne cinématique établit le fonctionnement des différents éléments, afin de délivrer par le moteur thermique la puissance totale nécessaire pour la recharge de l'accumulateur de pression hydraulique, en maintenant un niveau de pression contrôlé par un système de régulation de la pression, qui établit une demande de débit de la pompe.

Pour produire la puissance totale, le calculateur détermine en particulier la vitesse de rotation du moteur thermique ainsi que le couple de consigne qu'il doit délivrer, en fonction de plusieurs critères comprenant notamment le rendement et la performance de ce moteur et de la pompe hydraulique, ainsi que les contraintes acoustiques. Un asservissement de la vitesse de rotation et du couple délivrés par le moteur thermique est alors nécessaire pour atteindre les valeurs de consigne.

Les pertes mécaniques comprenant en particulier les frottements des différentes machines et du différentiel peuvent facilement être caractérisées par des essais pour chaque composant. Un modèle de la puissance consommée par les pertes mécaniques peut alors donner une bonne estimation de ces pertes.

Les pertes hydrauliques d'une machine correspondent au rendement volumétrique des machines hydrauliques, qui dépend des fuites hydrauliques pouvant être estimées en prenant en compte les conditions de fonctionnement de ces machines. Un modèle de la puissance consommée par ces pertes hydrauliques peut aussi être établi.

Toutefois, un problème qui se pose est qu'en fonction de différents paramètres, comme la viscosité de l'huile, la température ou l'usure des machines, des erreurs importantes peuvent être faites sur les estimations des pertes hydrauliques, qui dépendent fortement de la pression réelle dans le circuit.

L'invention a pour objet de réaliser un régulateur de pression hydraulique qui tienne compte d'erreurs d'estimation des pertes hydrauliques, afin de réduire les perturbations dues à ces erreurs dans le calcul de la puissance totale à délivrer par le moteur thermique.

Elle propose à cet effet un procédé de régulation de pression hydraulique, pour piloter la pression dans un circuit hydraulique par une demande de débit venant d'une pompe entraînée par une motorisation, afin de recharger un accumulateur de pression, ce procédé disposant d'une mesure de la pression réelle dans le circuit et d'un modèle d'estimation des fuites hydrauliques suivant les conditions de fonctionnement, caractérisé en ce qu'il réalise successivement les opérations suivantes :

- la différence entre la pression de consigne et la pression mesurée est calculée, puis elle est divisée par un paramètre de temps caractérisant une trajectoire de retour vers cette pression de consigne, pour obtenir une première consigne de dérivé d'écart de pression ;

- la première consigne de dérivé d'écart de pression ainsi que la pression mesurée sont utilisées dans un modèle d'accumulateur inversé, pour déterminer une première valeur de débit ;

- l'estimation du débit de fuite est ajoutée à la première valeur de débit, pour obtenir un pré-positionnement de débit lié à la trajectoire de retour ;

- l'estimation du débit de fuite est soustraite au pré-positionnement de débit, pour obtenir une deuxième valeur de débit qui est utilisée avec la pression mesurée par le modèle d'accumulateur, pour obtenir une consigne de dérivée de pression ;

- la dérivée de la pression mesurée est soustraite à la consigne de dérivée de pression, l'écart obtenu étant traité par un régulateur du type proportionnel intégral, pour donner une valeur de débit corrigée par les erreurs dues aux pertes ; et

- le pré-positionnement de débit est additionné avec la valeur de débit corrigée, pour obtenir la demande de débit qui régule la pression du circuit.

Un avantage du procédé de régulation de pression selon l'invention, est qu'en prenant en compte une trajectoire de retour vers la pression de consigne, dans le cas où la pression mesurée est très éloignée de cette pression de consigne, on évite les fortes variations de demande de débit de régulation, qui peut entraîner des écarts importants de la vitesse de rotation du moteur thermique, préjudiciables au confort et à la consommation.

Le procédé de régulation de pression selon l'invention peut de plus comporter une ou plusieurs des caractéristiques suivantes, qui peuvent être combinées entre elles.

Avantageusement, le pré-positionnement de débit lié à la trajectoire de retour, est soumis à une opération de limitation de débit utilisant des valeurs de débit minimum et maximum établies par un modèle gardé en mémoire, qui prend en compte différents paramètres de fonctionnement du circuit hydraulique.

En particulier, les débits minimum et maximum peuvent dépendre essentiellement des capacités de vidage et de remplissage de l'accumulateur de pression.

Selon un mode de réalisation, le modèle d'accumulateur utilisé, contenant un gaz de maintien de la pression, est le suivant :

$$dP \frac{\frac{dQ}{1}}{P_0^{\frac{1}{\gamma}} \times V_0} \times P^{1+\frac{1}{\gamma}}$$

avec

P = pression mesurée ;

Po = pression initiale de l'accumulateur à vide ;

Vo = volume initial de l'accumulateur à vide ;

dQ = débit de l'accumulateur ;

et γ = une constante pour le gaz de maintien de la pression.

L'invention a aussi pour objet un calculateur de contrôle prévu pour une chaîne cinématique d'un véhicule hybride, disposant d'un circuit hydraulique comportant une pompe entraînée par une motorisation, rechargeant un accumulateur de pression qui délivre cette pression à un moteur hydraulique, ce calculateur mettant en oeuvre un procédé de régulation de pression pilotant la haute pression qui comporte l'une quelconque des caractéristiques précédentes.

L'invention a de plus pour objet un véhicule hybride comprenant une chaîne cinématique disposant d'un circuit hydraulique comportant une pompe entraînée par une motorisation, rechargeant un accumulateur de pression qui délivre cette pression à un moteur hydraulique, ce véhicule mettant en oeuvre un procédé de régulation de pression pilotant la haute pression qui comporte l'une quelconque des caractéristiques précédentes.

L'invention sera mieux comprise et d'autres caractéristiques et avantages apparaîtront plus clairement à la lecture de la description ci-après, donnée à titre d'exemple, en référence aux dessins annexés dans lesquels :

- la figure 1 est un schéma d'une chaîne de traction pour un véhicule hybride, comprenant un circuit hydraulique piloté par un procédé de régulation de pression selon l'invention ;

- la figure 2 est un schéma fonctionnel du calcul corrigé des fuites hydrauliques ; et

- la figure 3 est un schéma fonctionnel du procédé de régulation de pression selon l'invention, donnant une demande de débit réalisant cette régulation.

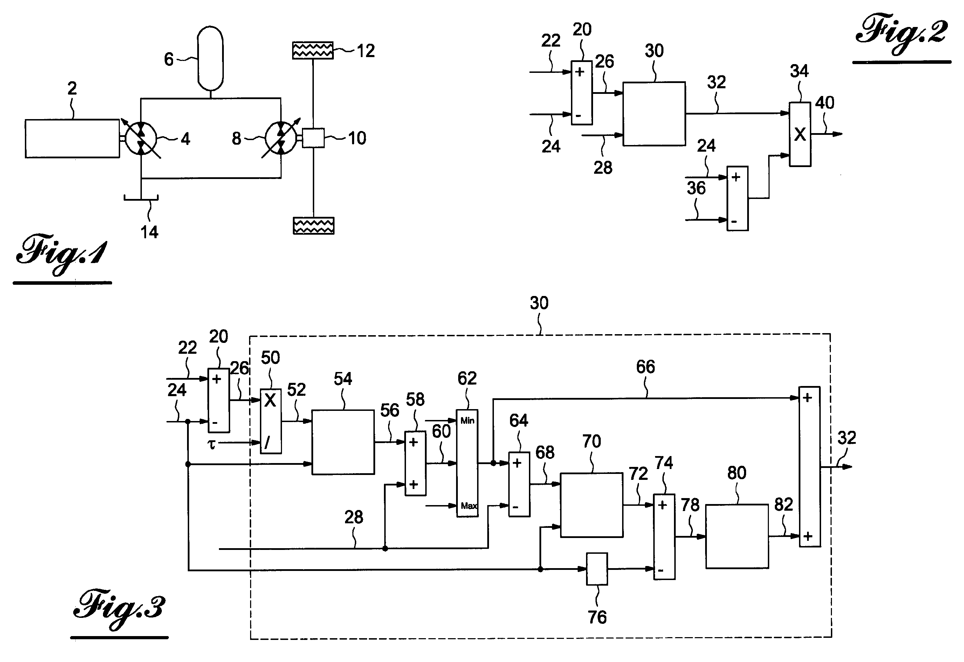

La figure 1 présente une chaîne de traction comprenant un moteur thermique 2 qui entraîne directement une pompe à cylindrée variable 4.

La pompe à cylindrée variable prélève un fluide dans un circuit basse pression BP, pour alimenter un circuit haute pression HP comprenant un accumulateur de pression 6. L'accumulateur de pression 6 peut regrouper un certain nombre d'éléments, disposés en parallèle ou en série, suivant tous les procédés connus d'accumulation de pression hydraulique.

Le circuit de pression HP est aussi relié à l'entrée d'un moteur hydraulique à cylindrée variable 8 pouvant fonctionner en moteur ou en pompe, qui entraîne par un différentiel 10 les deux roues motrices 12 d'un même essieu du véhicule. La sortie du moteur hydraulique 8 est reliée au circuit basse pression BP, contenant un réservoir basse pression de fluide 14.

Un calculateur de contrôle de la chaîne de traction reçoit une information sur la puissance demandée par le conducteur en pressant la pédale d'accélérateur, ainsi que des informations sur le fonctionnement de la chaîne de traction, notamment la pression mesurée dans le circuit hydraulique haute pression HP, pour régler différents paramètres comprenant notamment la vitesse de rotation du moteur thermique 2 et son couple délivré, ainsi que les cylindrées réglables de la pompe 4 et du moteur hydraulique 8.

Pour obtenir une puissance hydraulique réelle disponible correspondant à la demande du conducteur, il faut prendre en compte en particulier les pertes de puissance hydraulique du circuit causées par les fuites de fluide dans les différents composants. Ces pertes de puissance sont établies par un modèle d'estimation des débits de fuite, qui est corrigé en fonction de la pression mesurée dans le circuit hydraulique.

La figure 2 présente un calcul corrigé de perte de puissance hydraulique, égal au débit des pertes 32 multiplié par l'écart des pressions réelles 24, 28. Il comprend d'abord un calcul d'écart 20 entre la pression de consigne 22 et la pression mesurée 24, donnant le différentiel de commande de pression 26.

Un modèle d'estimation des débits de fuite, mis en oeuvre par le calculateur de contrôle, donne en fonction de la pression mesurée 24 une estimation du débit de fuite 28 qui est entrée avec le différentiel de commande de pression 26 dans un régulateur de pression 30.

Le régulateur de pression 30 délivre une demande de débit de régulation 32 qui est multipliée, dans une opération de multiplication 34, par l'écart entre la haute pression HP mesurée 24 et la basse pression BP mesurée 36, pour obtenir les pertes de puissance hydraulique corrigées 40.

Le régulateur de pression 30, intégré dans le calculateur de contrôle, met en oeuvre le procédé de régulation de pression dans le circuit hydraulique haute pression HP, va être maintenant décrit.

La figure 3 présente le procédé de régulation de pression 30 utilisant un modèle d'accumulateur 70 contenant un gaz de maintien de la pression, qui peut suivre en particulier le modèle suivant pour un travail adiabatique :

$$dP \frac{dQ}{P_0^{\frac{1}{\gamma}} \times V_0} \times P^{1+\frac{1}{\gamma}}$$

avec

P = pression mesurée 24 ;
Po = pression initiale de l'accumulateur 6 à vide ;
Vo = volume initial de l'accumulateur 6 à vide ;
dQ = débit de l'accumulateur 6 ;
et $\gamma$ = une constante pour le gaz de maintien de la pression.

Le procédé de régulation de pression 30 utilise aussi un modèle inversé d'accumulateur 54, qui est déduit du modèle précédent :

$$dQ = \frac{dP \times P_0^{\frac{1}{\gamma}} \times V_0}{P^{1+\frac{1}{\gamma}}}$$

Pour commencer, le procédé de régulation de pression 30 dérive, par une opération de division 50, le différentiel de commande de pression 26 par un paramètre de temps T définissant une trajectoire de retour vers la pression de consigne, pour obtenir une première consigne de dérivé d'écart de pression 52.

Le paramètre de temps T est une variable prédéfinie dans des tables gardées en mémoire qui caractérise la vitesse de retour de la pression réelle mesurée 24 vers la pression de consigne 22, en fonction de différents paramètres de fonctionnement du circuit hydraulique, notamment de l'écart entre ces deux valeurs de pression.

La première consigne de dérivé de pression 52 ainsi que la pression mesurée 24 sont utilisés par le modèle d'accumulateur inversé 54, pour déterminer une première valeur de débit 56.

L'estimation du débit de fuite 28, dans les conditions de fonctionnement en cours, est ajoutée dans une opération d'addition 58 à la première valeur de débit 56, pour obtenir un pré-positionnement de débit 60 lié à la trajectoire de retour définie par le paramètre de temps T.

L'opération suivante de limitation du débit 62 utilise des valeurs de débit minimum Min et maximum Max établies par un modèle, qui prend en compte différents paramètres de fonctionnement du circuit hydraulique, pour définir les limitations minimum et maximum de débit que peuvent accepter les différents composants. Les valeurs minimum Min et maximum Max dépendent essentiellement des capacités de vidage et de remplissage de l'accumulateur de pression 6.

On obtient un pré-positionnement de débit limité 66 qui, par cette opération de limitation du débit 62, comporte une robustesse en cas de saturation de l'accumulateur de pression 6.

Dans une opération suivante de soustraction 64, l'estimation du débit de fuite 28 est soustraite au pré-positionnement de débit limité 66 pour obtenir une deuxième valeur de débit 68, qui est utilisée avec la pression mesurée 28 par le modèle d'accumulateur 70, pour obtenir une consigne de dérivée de pression 72.

Dans une opération suivante de soustraction 74, la dérivée de la pression mesurée 24, établie par un calcul de dérivé de pression par rapport au temps 76, est soustraite à la consigne de dérivée de pression 72. L'écart obtenu 78 est traité par un régulateur du type proportionnel intégral 80, pour donner une valeur de débit corrigée par les erreurs dues aux pertes 82.

Dans une dernière opération, le pré-positionnement de débit limité 66 est additionné avec la valeur de débit corrigée 82, pour obtenir la demande de débit 32 qui régule la haute pression HP du circuit hydraulique.

On notera qu'en adaptant le facteur de temps T aux conditions de fonctionnement en cours du circuit hydraulique, on peut maîtriser plus finement le retour de la pression réelle 24, en évitant des variations brutales de cette pression qui pourraient entraîner des écarts importants de régime de rotation du moteur thermique, notamment dans le cas où le décalage de la mesure de pression par rapport à la consigne est important.

On peut notamment grâce à ce procédé de régulation 30, et avec la maîtrise du facteur de temps T, établir une fonction plus simple entre la position de la pédale d'accélérateur et la vitesse de rotation du moteur thermique. La consigne de puissance aux roues demandée par cette pédale est directement envoyée au modèle du moteur thermique, qui calcule alors la consigne de régime de manière sensiblement linéaire avec cette demande de puissance.

## Revendications

1. Procédé de régulation de pression hydraulique, pour piloter la pression (HP) dans un circuit hydraulique par une demande de débit (32) venant d'une pompe (4) entraînée par une motorisation (2), afin de recharger un accumulateur de pression (6), ce procédé disposant d'une mesure de la pression réelle (24) dans le circuit, et d'un modèle d'estimation des fuites hydrauliques (28) suivant les conditions de fonctionnement, **caractérisé en ce qu'**il réalise successivement les opérations suivantes :

   - la différence (26) entre la pression de consigne (22) et la pression mesurée (24) est calculée (20), puis elle est divisée (50) par un paramètre de temps (T) caractérisant une trajectoire de retour vers cette pression de consigne, pour obtenir une première consigne de dérivé d'écart de pression (52) ;
   - la première consigne de dérivé d'écart de pression (52) ainsi que la pression mesurée (24) sont utilisées dans un modèle d'accumulateur de pression inversé (54), pour déterminer une première valeur de débit (56) ;
   - l'estimation du débit de fuite (28) est ajoutée (58) à la première valeur de débit (56), pour obtenir un pré-positionnement de débit (60, 66) lié à la trajectoire de retour ;
   - l'estimation du débit de fuite (28) est soustraite (64) au pré-positionnement de débit (66), pour obtenir une deuxième valeur de débit (68) qui est utilisée avec la pression mesurée par le modèle d'accumulateur (70), pour obtenir une consigne de dérivée de pression (72) ;
   - la dérivée (76) de pression mesurée (24) est soustraite (74) à la consigne de dérivée de pression (72), l'écart obtenu (78) étant traité par un régulateur du type proportionnel intégral (80), pour donner une valeur de débit corrigée par les erreurs dues aux pertes (82) ; et
   - le pré-positionnement de débit (66) est additionné avec la valeur de débit corrigée (82), pour obtenir la demande de débit (32) qui régule la pression du circuit.

2. Procédé de régulation de pression selon la revendication 1, caractérisé en ce que le pré-positionnement de débit (60) lié à la trajectoire de retour est soumis à une opération de limitation de débit (62) utilisant des valeurs de débit minimum (Min) et maximum (Max) établies par un modèle gardé en mémoire, qui prend en compte différents paramètres de fonctionnement du circuit hydraulique.

3. Procédé de régulation de pression selon la revendication 2, **caractérisé en ce que** les débits minimum (Min) et maximum (Max) dépendent essentiellement des capacités de vidage et de remplissage de l'accumulateur de pression (6).

4. Procédé de régulation de pression selon l'une quelconque des revendications précédentes, **caractérisé en ce que** le modèle d'accumulateur utilisé (70), contenant un gaz de maintien de la pression, est le suivant :

$$dP \, \frac{dQ}{P_0^{\frac{1}{\gamma}} \times V_0} \times P^{1 + \frac{1}{\gamma}}$$

avec

   P = pression mesurée 24 ;
   Po = pression initiale de l'accumulateur 6 à vide ;
   Vo = volume initial de l'accumulateur 6 à vide ;
   dQ = débit de l'accumulateur 6 ;
   et $\gamma$ = une constante pour le gaz de maintien de la pression.

5. Calculateur de contrôle prévu pour une chaîne cinématique d'un véhicule hybride comportant un circuit hydraulique comportant une pompe (4) entraînée par une motorisation (2) et un accumulateur de pression (6) délivrant cette pression à un moteur hydraulique (8), **caractérisé en ce qu'**il met en oeuvre un procédé de régulation de pression (30) pilotant la haute pression (HP) dans ce circuit selon l'une quelconque des revendications précédentes.

6. Véhicule hybride comprenant une chaîne cinématique disposant d'un circuit hydraulique comportant une pompe (4), entraînée par une motorisation (2),

et un accumulateur de pression (6) délivrant cette pression à un moteur hydraulique (8), **caractérisé en ce qu'**il met en oeuvre un procédé de régulation de pression (30) pilotant la haute pression (HP) dans ce circuit selon l'une quelconque des revendications 1 à 4.

**Patentansprüche**

1. Verfahren zur Regelung des hydraulischen Drucks, um den Druck (HP) in einem Hydraulikkreislauf durch eine Durchflussnachfrage (32), die von einer Pumpe (4) kommt, die von einem Antrieb (2) angetrieben wird, zu steuern, um einen Druckakkumulator (6) aufzuladen, wobei dieses Verfahren über eine Messung des Ist-Drucks (24) in dem Kreislauf verfügt, und über ein Schätzungsmodul der hydraulischen Lecks (28) gemäß den Betriebszuständen, **dadurch gekennzeichnet, dass** es nacheinander die folgenden Vorgänge ausführt:

   - Berechnung (20) des Unterschieds (26) zwischen dem Solldruck (22) und dem gemessenen Druck (24), dann Teilen (50) durch einen Zeitparameter (T), der einen Rückkehrverlauf zu diesem Solldruck charakterisiert, um einen ersten Druckabweichungs-Unterschiedssollwert (52) zu erhalten,
   - Verwenden des ersten Druckabweichungs-Unterschiedssollwerts (52) sowie des gemessenen Drucks (24) in einem umgekehrten Druckakkumulatormodell (54), um einen ersten Durchsatzwert (56) zu bestimmen,
   - Hinzufügen (58) der Schätzung der Leckrate (28) zu dem ersten Durchflusswert (56), um eine Durchflussvorpositionierung (60, 66), die mit dem Rückkehrverlauf verbunden ist, zu erhalten,
   - Abziehen (64) der Schätzung der Leckrate (28) von der Durchflussvorpositionierung (66), um einen zweiten Durchflusswert (68) zu erhalten, der mit dem von dem Akkumulatormodell (70) gemessenen Druck verwendet wird, um einen Druckunterschiedsollwert (72) zu erhalten,
   - Abziehen (74) des Unterschieds (76) des gemessenen Drucks (24) von dem Druckunterschiedsollwert (72), wobei der erhaltene Unterschied (78) von einem Regler des proportionalen integralen Typs (80) verarbeitet wird, um einen Durchflusswert zu geben, der mit den Fehlern, die auf Verluste (82) zurückzuführen sind, korrigiert ist, und
   - Addieren der Durchflussvorpositionierung (66) mit dem korrigierten Durchflusswert (82), um die Durchflussnachfrage (32), die den Druck des Kreislaufs regelt, zu erhalten.

2. Verfahren zum Druckregeln nach Anspruch 1, **dadurch gekennzeichnet, dass** die Durchflussvorpositionierung (60), die mit dem Rückkehrverlauf verbunden ist, einem Druckbegrenzungsvorgang (62) unterzogen wird, der Mindestdurchflusswerte (Min) und Maximaldurchflusswerte (Max) verwendet, die durch ein gespeichertes Modell, das unterschiedliche Betriebsparameter des Hydraulikkreislaufs berücksichtigt, erstellt werden.

3. Verfahren zum Druckregeln nach Anspruch 2, **dadurch gekennzeichnet, dass** die Mindestdurchflüsse (Min) und Maximaldurchflüsse (Max) im Wesentlichen von den Entleerungs- und Füllkapazitäten des Druckakkumulators (6) abhängen.

4. Verfahren zum Druckregeln nach einem der vorhergehenden Ansprüche, **dadurch gekennzeichnet, dass** das verwendete Akkumulatormodell (70), das ein Gas zum Halten des Drucks enthält, wie folgt lautet:

$$dP \frac{dQ}{P_0^{\frac{1}{\gamma}} \times V_0} \times P^{1+\frac{1}{\gamma}}$$

wobei

   P = gemessener Druck (24),
   Po = anfänglicher Druck des Akkumulators (6) im leeren Zustand,
   Vo - anfängliches Volumen des Akkumulators (6) im leeren Zustand,
   dQ = Durchfluss des Akkumulators (6),
   und γ = eine Konstante für das Druckhaltegas.

5. Steuerrechner, der für eine kinematische Kette eines Hybridfahrzeugs vorgesehen ist, das einen Hydraulikkreislauf umfasst, der eine Pumpe (4) umfasst, die von einem Antrieb (2) angetrieben wird, und einen Druckakkumulator (6), der diesen Druck zu einem Hydraulikmotor (8) liefert, **dadurch gekennzeichnet, dass** er ein Druckregelverfahren (30) umsetzt, das den Hochdruck (HP) in dem Kreislauf gemäß einem der vorhergehenden Ansprüche steuert.

6. Hybridfahrzeug, das eine kinematische Kette umfasst, die über einen Hydraulikkreislauf verfügt, der eine Pumpe (4) umfasst, die von einem Antrieb (2) angetrieben wird, und einen Druckakkumulator (6), der diesen Druck zu einem Hydraulikmotor (8) liefert, **dadurch gekennzeichnet, dass** sie ein Druckregelverfahren (30) umsetzt, das den Hochdruck (HP) in diesem Kreislauf nach einem der Ansprüche 1 bis 4 steuert.

**Claims**

1. A method for regulating hydraulic pressure, to manage the pressure (HP) in a hydraulic circuit using a flow demand (32) from a pump (4) driven by a motor (2), so as to recharge a pressure accumulator (6), this method using a measurement of the actual pressure (24) in the circuit and a model estimating hydraulic leaks (28) according to the operating conditions, **characterized in that** it realizes successively the following operations:

   - the difference (26) between the datum pressure (22) and the measured pressure (24) is calculated (20), then it is divided (50) by a time parameter (T) characterizing a return trajectory towards this datum pressure, to obtain a first pressure derivative discrepancy datum (52);
   - the first pressure derivative discrepancy datum (52) and the measured pressure (24) are used in an inverse pressure accumulator model (54) to determine a first flow value (56);
   - the estimation of the leak flow (28) is added (58) to the first flow value (56), to obtain a flow pre-positioning (60, 66) linked to the return trajectory;
   - the estimation of the leak flow (28) is subtracted (64) with respect to the flow pre-positioning (66), to obtain a second flow value (68) which is used with the measured pressure by the accumulator model (70), to obtain a pressure derivative datum (72);
   - the measured pressure derivative (76) is subtracted (74) with respect to the pressure derivative datum (72), the obtained discrepancy (78) being processed by a proportional-integral type regulator (80), to give a flow rate value corrected by the errors due to the losses (82); and
   - the flow pre-positioning (66) is added with the corrected flow rate value (82), to obtain the flow demand (32) which regulates the pressure of the circuit.

2. The method for regulating pressure according to Claim 1, **characterized in that** the flow pre-positioning (60) linked to the return trajectory is subjected to a flow limitation operation (62) using minimum (Min) and maximum (Max) flow rate values established by a stored model, which takes into account different operating parameters of the hydraulic circuit.

3. The method for regulating pressure according to Claim 2, **characterized in that** the minimum (Min) and maximum (Max) flows depend essentially on the emptying and filling capacities of the pressure accumulator (6).

4. The method for regulating pressure according to any one of the preceding claims, **characterized in that** the accumulator model (70) which is used, containing a pressure maintaining gas, is as follows:

$$dP \frac{\dfrac{dQ}{1}}{P_0^{\frac{1}{\gamma}} \times V_0} \times P^{1+\frac{1}{\gamma}}$$

with

   P = measured pressure 24;
   Po = initial pressure of the no-load accumulator 6;
   Vo = initial volume of the no-load accumulator 6;
   dQ = flow of the accumulator 6;
   and $\gamma$ = a constant for the pressure maintaining gas.

5. A control computer provided for a drive train of a hybrid vehicle comprising a hydraulic circuit comprising a pump (4) driven by a motor (2) and a pressure accumulator (6) delivering this pressure to a hydraulic motor (8), **characterized in that** it implements a method for regulating pressure (30) managing the high pressure (HP) in this circuit according to any one of the preceding claims.

6. A hybrid value including a drive train having a hydraulic circuit comprising a pump (4), driven by a motor (2), and a pressure accumulator (6) delivering this pressure to a hydraulic motor (8), **characterized in that** it implements method for regulating pressure (30) managing the high pressure (HP) in this circuit according to any one of Claims 1 to 4.

EP 2 870 385 B1

*Fig.1*

*Fig.2*

*Fig.3*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 1256342
- DE 10143830 A